# EUROPEAN PATENT SPECIFICATION

(11) **EP 3 031 849 B1**
(45) Date of publication and mention of the grant of the patent: **24.10.2018**
(21) Application number: 14197548.2
(22) Date of filing: 12.12.2014
(51) Int. Cl.: C08J 5/18, C08L 23/08, C08L 23/14

(54) **Polypropylene films with improved optics and mechanical properties**
Polypropylenfolien mit verbesserten optischen und mechanischen Eigenschaften
Films de polypropylène aux propriétés optiques et mécaniques améliorées

(43) Date of publication of application: 15.06.2016
(73) Proprietor: Borealis AG, 1220 Vienna (AT)
(72) Inventor: Defoer, Johan, 2800 Mechelen (BE); De Wever, Willem, 3500 Hasselt (BE); Croonen, Sara, 2440 Geel (BE)
(74) Representative: Dehns

(56) References cited:
- EP-A1- 0 936 247
- EP-A1- 1 889 873
- EP-A2- 0 353 981

## Description

The present invention is related to polypropylene (PP) films produced with blown film or cast film technology from blended PP resins. The blend for these films is a mixture of a random propylene copolymer and a specific amount of an ethylene based plastomer. The films according to the invention show improved optics (lower haze and higher gloss) and simultaneously improved mechanical properties, like improved toughness and especially improved tear resistance.

### Background information

Films made out of polypropylene random copolymers are very common within the polymer industry and are used in applications that require superior optical properties such as gloss, transparency, surface smoothness, planarity and good tear resistance.

Such films can be used as lamination or mono- or multilayer films, general as packaging films, e.g. food packaging such as wrapping films and containers, and medical/hygienic films, wherein the random propylene copolymer films comprise at least one layer.

All film manufacturers, whether making multilayer or monolayer films are looking to maximise the properties of the film it produces. Maximisation of properties is normally easier with multilayer films as each layer can be tailored to provide a particular attribute of need. It is common for example to use an outer layer which can give rise to good sealing properties whilst a core layer might be used to provide mechanical strength to a film. Moreover, when using a multilayer construction, incompatibility between film components can be avoided by placing these in separate layers.

When a film is mono-layered however, the options available to the film manufacturer are much more limited. It is currently very difficult to prepare monolayer films having optimal properties, e.g. good mechanical and processing properties and the person skilled in the art is therefore looking for new films which can provide improvements to these. Especially problematic are optical properties as the more components used in a monolayer film, the higher the haze value of the film tends to be.

The problem faced by the film manufacturer is that by trying to improving one property, another equally important property tends to be detrimentally affected. There are also real problems of compatibility between different polymers in a monolayer construction where all components are extruded together as a blend. If polymer components are not compatible, inhomogeneity is evident in the formed film which is unacceptable for the manufacturer and consumer. This limits still further the parameters which the film chemist can manipulate.
Films used for packaging need excellent optical properties, i.e. low haze, so as to be sufficiently transparent and high levels of gloss to give off the necessary aesthetic appearance.
A further requirement of films used in packaging is that it should be strong. This ensures that the film is not easily damaged (e.g. during transportation or handling) and that it will retain its form once the package is opened. It is particularly important that films used in packaging do not have a tendency to tear. A recognised problem with many films, and especially films used in food packaging, is that it is very easy to accidentally introduce a tear when opening the packaging. Such tears have an undesirable tendency to elongate which can cause the contents of the packaging to spill.
Many combinations of polymers have been suggested for the manufacture of advantageous mono-layer films, but none have so far proposed the solution, which gives rise to films having an excellent balance of mechanical properties, like stiffness and high tear resistance, and optical properties. Polypropylene resin compositions based on blends of three components and non-stretched films thereof have been described for example in EP0936247A1. However, although much development work has already been done in the field of films suitable for different kinds of packaging, the films as disclosed in the prior art still do not provide a sufficient balance of stiffness in combination with high tear resistance and improved optics, so that there exists a need for novel and improved film structures, providing films with excellent stiffness in combination with improved high tear resistance and simultaneously improved optics.
Surprisingly the inventors found, that the above problems can be solved with the use of a blend comprising a random propylene copolymer and a specific amount of an ethylene based plastomer.

### Summary of the Invention

Films comprising the blend of random propylene copolymer (a) and specific amounts of an ethylene based plastomer (b) show simultaneously improved optic properties and improved tear resistance compared to films without any ethylene based plastomer (b).

Thus, in a first aspect the present invention relates to polypropylene mono-layer films produced with blown film or cast film technology comprising a blend of
a) 85.0 to 98.0 wt%, based on the blend, of a random propylene copolymer, wherein said random propylene copolymer consists of units derived from propylene and ethylene, and
b) 2.0 to 15.0 wt%, based on the blend, of an ethylene based plastomer having a density according to ISO 1183D of 0.915 g/cm³ or below and an MFR₂ according to ISO 1133 (190°C; 2.16kg) in the range of 2.0 to 30 g/10 min wherein the amounts of a) and b) sum to 100 wt%;
wherein the film has
i) a haze according to ASTM D1003 for a film thickness of 50 µm of at most 2.0%
ii) a gloss (20°) according to ASTM D2457 for a film thickness of 50 µm of at least 80% and
iii) a relative tear resistance in machine direction [cN/µm] according to Elmendorf method (ISO 6383-2) for a film thickness of 50 µm of at least 0.70 cN/µm and a relative tear resistance in transverse direction [cN/µm] according to Elmendorf method (ISO 6383-2) for a film thickness of 50 µm of at least 1.80 cN/µm
In a further aspect the present invention is related to the use of the mono-layer films according to the invention for lamination or mono- or multilayer films for packaging films and medical/hygienic films, wherein the mono-layer films according to the invention comprise at least one layer.
In a yet a further aspect the present invention is related to the use of ethylene based plastomers having a density according to ISO 1183D of 0.915 g/cm³ or below and an MFR₂ according to ISO 1133 (190°C; 2.16kg) in the range of 2.0 to 30 g/10 min for improving simultaneously optic properties, such as haze and gloss, as well as tear resistance of a random propylene copolymer mono-layer film.

### Detailed description

In the following the individual components are defined in more detail.

### Random propylene copolymer

The random propylene copolymer comprises units derived from propylene and at least ethylene or another C₄ to C₂₀ α-olefin, preferably at least ethylene or another C₄ to C₁₀ α-olefin. Accordingly the random propylene copolymer (R-PP) comprises units derived from propylene and at least ethylene or another α-olefin selected from the group consisting of C₄ α -olefin, C₅ α-olefin, C₆ α-olefin, C₇ α-olefin, C₈ α-olefin, C₉ α-olefin and C₁₀ α-olefin. More preferably the random propylene copolymer comprises units derived from propylene and at least ethylene or another α-olefin selected from the group consisting of 1-butene, 1-pentene, 1-hexene, 1-heptene, 1-octene, 1-nonene and 1-decene, wherein ethylene, 1-butene and 1-hexene are preferred. It is in particular preferred that the random propylene copolymer consists of units derived from propylene and ethylene.

The amount of units derived from C₂ to C₂₀ α-olefins other than propylene, preferably from ethylene, in the random propylene copolymer is in the range of 1.0 to 7.0 wt%, more preferably 1.5 to 6.0 wt%, still more preferably 2.0 to 5.5 wt%.

The Melt flow rate (MFR_{230/2.16}) of the random propylene copolymer is determined according to ISO1133, and can be in the range of 1.5 to 15.0 g/10min, more preferably in the range of 1.8 to 10.0 g/10min, like in the range of 2.0 to 9.0 g/10min.

The random propylene copolymer can be further unimodal or multimodal, like bimodal in view of the molecular weight distribution and/or the comonomer content distribution; both unimodal and bimodal polypropylenes are equally preferred.

The random propylene copolymer can be produced by polymerization in the presence of any conventional coordination catalyst system including Ziegler-Natta, chromium and single site (like metallocene catalyst), preferably in the presence of a Ziegler-Natta catalyst system.

The random propylene copolymer can furthermore be optionally nucleated with at least one α -nucleating agent.

In principle any α-nucleating agent can be used. Examples of suitable α-nucleating agents are selected from the group consisting of
(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and C₁₈-C-alkyl-substituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), nonitol,1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer.

Such additives are generally commercially available and are described, for example, in Gachter/Muller, Plastics Additives Handbook, 4th Edition, Hansa Publishers, Munich, 1993.

The nucleating agent content of the random propylene copolymer is preferably from 0.001 up to 1 wt%, preferably from 0.02 to 0.50 wt%, of a α-nucleating, in particular sodium benzoate, 1,3:2,4-bis-(3,4-dimethyl-benzylidene)-sorbitol, sodium-2,2'-methylenebis-(4,6-di-tert-butylphenyl)-phosphate, hydroxybis-(2,4,8,10-tetra-tert-butyl-6-hydroxy-12h-dibenzo-(d,g)(1,3,2)-dioxaphosphocin-oxidato)-aluminium, ADK STAB NA-21 (Adeka Palmarole, France), Hyperform HPN-20 E (Milliken, USA) or mixtures thereof.

In case the α-nucleating agents are polymeric α-nucleating agents selected from the group consisting of vinylcycloalkane polymers and vinylalkane polymers, these polymeric nucleating agents are either accomplished by a special reactor technique, where the catalyst is prepolymerized with monomers like e.g. vinylcyclohexane (VCH), or by blending the polypropylene composition with the vinylcycloalkane polymer or vinylalkane polymer. It is also possible, to use polymers, which already contain the polymeric nucleating agent (so-called **master batch technology)** in order to introduce the polymeric nucleating agent into the random propylene copolymer.

The preferred alpha-nucleation method, is the special reactor technique, where the catalyst is prepolymerized with at least one vinyl compound, said method is herein later referred to as "BNT". This method is described in detail in EP 1 028 984 and EP 1 183 307. For the purpose of this invention "BNT" is referred to as alpha-nucleating agent.

Preferred vinyl compounds to be used in the Borstar Nucleation Technology (BNT)-method are represented by the following formula 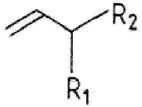 wherein R¹ and R² are independently selected from C₁-C₄-alkyl groups or they form together a saturated, an unsaturated or an aromatic five- or six-membered ring, whereby this ring may be substituted and/or bridged with one or more C₁- or C₂-alkyl groups.

More preferably the vinyl compound is selected from vinyl cycloalkanes, e.g. vinyl cyclopentane, vinyl cyclohexane, vinyl-2-methyl-cyclohexane and vinyl norbonane, 3-methyl-1-butene, styrene, p-methyl-styrene, 3-ethyl-1-hexene or mixtures thereof, particularly preferred is vinyl cyclohexane (VCH).

Preferably, the catalyst is prepolymerized in the BNT method at a temperature significantly below the polymerization temperature.

In case the catalyst is prepolymerized with the BNT method as described above, said prepolymer fraction is preferably present in an amount of up to 1.0 wt. %, more preferably up to 0.5 wt. % and most preferably up to 0.2 wt. % based on the random propylene copolymer.

In case the catalyst is prepolymerized with the BNT method as described above, said prepolymer fraction is preferably present in an amount of at least 0.0001 wt. %, more preferably of at least 0.001 wt. %, even more preferably of at least 0.005 wt. %, and most preferably of at least 0.01 wt.% based on the random propylene copolymer.

### Ethylene based plastomer

The ethylene based plastomer is a copolymer of ethylene and propylene or a C₄ - C₁₀ alpha-olefin.

Suitable C₄ - C₁₀ alpha-olefin include 1-butene, 1-hexene and 1-octene, preferably 1-butene or 1-octene and more preferably 1-octene.

Preferably copolymers of ethylene and 1-octene are used.

Suitable ethylene based plastomers have a density in the range of 0.860 - 0.915 g/cm³, preferably in the range of 0.870 to 0.910 g/cm³.

The MFR₂(ISO 1133; 190°C; 2.16kg) of suitable ethylene based plastomers is in the range of 2.0 - 30 g/10 min, preferably in the range of 3.0 - 20 g/10 min and more preferably in the range of 5.0 - 15.0 g/min.

The melting points (measured with DSC according to ISO 11357-3:1999) of suitable ethylene based plastomers are below 130°C, preferably below 120°C, more preferably below 110°C and most preferably below 100°C.

Furthermore suitable ethylene based plastomers have a glass transition temperature Tg (measured with DMTA according to ISO 6721-7) of below -25°C, preferably below -30°C, more preferably below -35°C.

In case the copolymer is a copolymer of ethylene and propylene it has an ethylene content from 10 to 55 wt%, preferably from 15 to 50 wt% and more preferably from 18 to 48 wt%.

In case the copolymer is a copolymer of ethylene and a C₄ - C₁₀ alpha olefin it has an ethylene content from 60 to 95 wt%, preferably from 65 to 90 wt% and more preferably from 70 to 88 wt%.

The molecular mass distribution Mw/Mn of suitable ethylene based plastomers is most often below 4, such as 3.8 or below, but is at least 1.7. It is preferably between 3.5 and 1.8.

Suitable ethylene based plastomers can be any copolymer of ethylene and propylene or ethylene and C₄ - C₁₀ alpha olefin having the above defined properties, which are commercial available, i.a. from Borealis Plastomers (NL) under the tradename Queo, from DOW Chemical Corp (USA) under the tradename Engage or Affinity, or from Mitsui under the tradename Tafmer.

Alternately these ethylene based plastomers can be prepared by known processes, in a one stage or two stage polymerization process, comprising solution polymerization, slurry polymerization, gas phase polymerization or combinations therefrom, in the presence of suitable catalysts, like vanadium oxide catalysts or single-site catalysts, e.g. metallocene or constrained geometry catalysts, known to the art skilled persons.

Preferably these ethylene based plastomers are prepared by a one stage or two stage solution polymerization process, especially by high temperature solution polymerization process at temperatures higher than 100°C.

Such process is essentially based on polymerizing the monomer and a suitable comonomer in a liquid hydrocarbon solvent in which the resulting polymer is soluble. The polymerization is carried out at a temperature above the melting point of the polymer, as a result of which a polymer solution is obtained. This solution is flashed in order to separate the polymer from the unreacted monomer and the solvent. The solvent is then recovered and recycled in the process.

Preferably the solution polymerization process is a high temperature solution polymerization process, using a polymerization temperature of higher than 100°C. Preferably the polymerization temperature is at least 110°, more preferably at least 150°C. The polymerization temperature can be up to 250°C.

The pressure in such a solution polymerization process is preferably in a range of 10 to 100 bar, preferably 15 to 100 bar and more preferably 20 to 100 bar.

The liquid hydrocarbon solvent used is preferably a C₅₋₁₂-hydrocarbon which may be unsubstituted or substituted by C₁₋₄ alkyl group such as pentane, methyl pentane, hexane, heptane, octane, cyclohexane, methylcyclohexane and hydrogenated naphtha. More preferably unsubstituted C₆₋₁₀-hydrocarbon solvents are used.

A known solution technology suitable for the process according to the invention is the COMPACT technology.

Inventors have found that especially good results in view of optics and tear resistance can be achieved, when ethylene based plastomers are used, which have an MFR190/2.16 of at least 3.0 g/10 min, preferably at least 5.0 g/10 min.

### Blend

The film according to the invention comprises a blend of the above described components. Thus, 85 wt% to 98 wt% of the random propylene copolymer are blended with 2.0 wt% to 15 wt% of the ethylene based plastomer.

Preferably 88 wt% to 97 wt% of the random propylene copolymer are blended with 3.0 wt% to 12 wt% of the ethylene based plastomer.

More preferably 90 wt% to 95 wt% of the random propylene copolymer are blended with 5.0 wt% to 10 wt% of the ethylene based plastomer.

The Melt flow rate (MFR_{230/2.16}) the random propylene copolymer-plastomer-blend, determined according to ISO1133, can be at most 15.0 g/10 min or below, such as 13.0 g/10 min or below.

The Melt flow rate (MFR_{230/2.16}) the polypropylene-plastomer-blend, determined according to ISO1133, can be of at least 0.1 g/10 min or higher, such as at least 1.5 g/10 min or higher.

For the production of cast films, it is preferred, that the Melt flow rate (MFR_{230/2.16}) of the random propylene copolymer-plastomer-blend is in the range of 3.0 to 12.0 g/10min, more preferably in the range of 4.5 to 11.5 g/10min, like in the range of 5.0 to 11.0 g/10min.

For the production of blown films, it is preferred, that the Melt flow rate (MFR_{230/2.16}) of the random propylene copolymer-plastomer-blend is in the range of 5.0 g/10min, or below, more preferably in the range of 4.5 g/10min or below, like in the range of 0.2 - 3.8 g/10min, such as 0.3 - 3.2 g/10 min, or like 0.3 - 2.8 g/10min.

For film formation using the blend it is important that the different polymer components be intimately mixed prior to casting/blowing of the film as otherwise there is a risk of inhomogeneities, e.g. gels, appearing in the film. Sufficient homogeneity can also be obtained by selecting the screw design for the film extruder such that it is designed for good mixing and homogenising.

The blend can be produced by any suitable melt mixing process at temperatures above the melting point of the respective blend. Typical devices for performing said melt mixing process are twin screw extruders, single screw extruders optionally combined with static mixers, chamber kneaders like Farrel kneaders, Banbury type mixers and reciprocating co-kneaders like Buss co-kneaders. Preferably, the melt mixing process is carried out in a twin screw extruder with high intensity mixing segments and preferably at a temperature of 170 to 270 °C, more preferably of 180 to 250 °C.

It is also possible to produce the blend of the present invention by dry-blending in a suitable mixing equipment, like horizontal and vertical agitated chambers, tumbling vessels, and Turbula mixers, as long as sufficient homogeneity is obtained.

It is to be understood that the addition of an additive is common in the art. Hence, it is to be regarded as disclosed and known to the skilled person that any of the herein mentioned additives, in amounts common in the art, may be singularly or in combination with others added to the blend of random propylene copolymer and ethylene based plastomer disclosed herein.

Usual additives are for example the below listed once:
Antioxidants are commonly used in the art, examples are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)™ by BASF), sulphur based antioxidants (such as CAS No. 693-36-7, sold as Irganox PS-802 FL™ by BASF), nitrogen-based antioxidants (such as 4,4'-bis(1,1'-dimethylbenzyl)diphenylamine), or antioxidant blends.

Acid scavengers are also commonly known in the art. Examples are calcium stearates, sodium stearates, zinc stearates, magnesium and zinc oxides, synthetic hydrotalcite (e.g. SHT, CAS-no. 11097-59-9), lactates and lactylates, as well as calcium and zinc stearates.

Common antiblocking agents are natural silica such as diatomaceous earth (such as CAS-no. 60676-86-0 (SuperfFloss™), CAS-no. 60676-86-0 (SuperFloss E™), or CAS-no. 60676-86-0 (Celite 499™)), synthetic silica (such as CAS-no. 7631-86-9, CAS-no. 7631-86-9, CAS-no. 7631-86-9, CAS-no. 7631-86-9, CAS-no. 7631-86-9, CAS-no. 7631-86-9, CAS-no. 112926-00-8, CAS-no. 7631-86-9, or CAS-no. 7631-86-9), silicates (such as aluminum silicate (Kaolin) CAS-no. 1318-74-7, sodium aluminum silicate CAS-no. 1344-00-9, calcined kaolin CAS-no. 92704-41-1, aluminum silicate CAS-no. 1327-36-2, or calcium silicate CAS-no. 1344-95-2), synthetic zeolites (such as sodium calcium aluminosilicate hydrate CAS-no. 1344-01-0, CAS-no. 1344-01-0, or sodium calcium aluminosilicate, hydrate CAS-no. 1344-01-0)

Suitable UV-stabilisers are, for example, Bis-(2,2,6,6-tetramethyl-4-piperidyl)-sebacate (CAS 52829-07-9, Tinuvin 770); 2-hydroxy-4-n-octoxy-benzophenone (CAS 1843-05-6, Chimassorb 81) nucleating agents like sodium benzoate (CAS 532-32-1); 1,3:2,4-bis(3,4-dimethylbenzylidene)sorbitol (CAS 135861-56-2, Millad 3988),
Pigments like carbon black, TiO2 or the like,
Usually these additives are added in quantities of 100-10.000 ppm for each single component.

### Production of films

The above described blends are suitable for the production of blown films as well as cast films.

### Description of film production by blown film technology

The above described blends are capable of being manufactured into water or air quench blown films, preferably air quenched blown films, on typical polyethylene blown film production equipment.

In principle the process comprising the steps of
(i) blowing up a tube of molten material with air perpendicularly to the upwards direction from a side-fed blown film die;
(ii) cooling it down with water contact cooling ring or air quench;
(iii) folding it and guiding it over deflector rolls onto the winder

### Blown film technology with water contact cooling ring

In this technology for producing polymer films, the molten blend is extruded through a tubular die fed by a (usually single-screw) extruder and blown up to a tube. The film tube has contact on the exterior side to a water cooling ring and is cooled down quickly. The already solidified film tube is flattened afterwards by take-up rolls and taken off to a winder.

For a more detailed description see "Polypropylene Handbook", edited by Edward P. Moore, Jr., Hanser Publishers, 1996.

### Blown film technology with air quench

In this manufacturing step for air quenched blown films the film is made using at least a 1.5 blow up ratio, preferably at least a 2.0 blow up ratio, more preferably at least a 2.5 blow up ratio.

The technique of air quenched blown film extrusion is well known for the production of thin plastic films. In an advantageous process, above described blends are extruded through a circular die to form a film. Air is introduced through the center of the die to maintain the film in the form of a bubble which increases the diameter of the film about 1.5 to 6 fold, after which the bubble is collapsed onto rolers. There are a number of variations of such a process within the skill in the art. Most references to blowing polyolefin films disclose processes used for polyethylene, but these are applicable to the above described blends within few modifications within the skill in the art without undue experimentation.

For instance cooling is often advantageously modified because the art recognizes that polypropylene cools and crystallizes at a rate different from that of polyethylene.

Therefore, adjustments to the cooling parameters often produce a more stable bubble at desired output rates.

In the formation of blown films, the melted blend (melt) enters a ring-shaped die either through the bottom or side thereof. The melt is forced through spiral grooves around the surface of a mandrel inside the die and extruded through the die opening as a thick-walled tube. The tube is expanded into a bubble of desired diameter and correspondingly decreased thickness as previously described.

### Description of film production by cast film technology

In this most simple technology for producing polymer films, the molten blend is extruded through a slot die fed by a (normally single-screw) extruder onto a first cooled roll, the so-called chill-roll. From this roll, the already solidified film is taken up by a second roll (nip roll or take-up roll) and transported to a winding device after trimming the edges. Only a very limited amount of orientation is created in the film, which is determined by the ratio between die thickness and film thickness or the extrusion speed and the take-up speed, respectively. Due to its technical simplicity, cast film technology is a very economical and easy-to-handle process. The films resulting from this technology are characterised by good transparency and rather isotropic mechanical properties (limited stiffness, high toughness).

### Summing up the process comprises the steps of

i) pouring or spreading a solution, hot-melt or dispersion of a material onto a temporary carrier
ii) hardening the material, and
iii) stripping the hardened film from the surface of the carrier.

Mono-layer films having a thickness of 5 to 300 µm, preferably 10 to 200 µm, more preferably 20 to 150 µm are suitable according to the present invention.

Films according to the present invention may be non-oriented, mono-axially or bi-axially oriented.

It is preferred, that the films are non-oriented.

Especially preferred are however cast-films, especially preferred are non-oriented cast films.

Following their production films comprising the random propylene copolymer-plastomer-blend may be subjected to a surface energy increasing treatment, such as for example chemical treatment, flame- treatment, plasma-treatment and Corona-treatment.

The preferred methods are Plasma- and Corona-treatment. The most preferred method is Corona-treatment.

Corona treatment increases the surface energy of the film and consequently its surface tension. The system includes a power source and the treatment station. The power source transform 50/60 Hz plant power into much higher frequency power in a range of 10 to 30 kHz. This higher frequency energy is supplied to the treatment station and is applied to the film surface by means of two electrodes, one with high potential and the other with low potential, through an air gap that typically ranges from 0.5 inches to 1 inch. The surface tension on the film surface is increased when the high potential difference that is generated ionizes the air.

Corona treatment can be done inline or as a separate downstream process once the film is produced. If performed inline, special consideration must be given to the potential generation of toxic ozone. In some cases, it is necessary to provide a ventilation system in the production area. For flame treatment with a polarized flame an electrical voltage is applied between a burner, serving as the negative pole, and another element, for example a chill roll in film or sheet extrusion. The applied voltage is in the range from about 0.5 kV to about 3 kV. It causes an acceleration of ionized atoms, which hit the polypropylene surface at great speed and then break bonds on the surface of the polypropylene article. In consequence, polar centers are created.

The inventive films have advantageous properties, like increased optical properties and increased tear resistance.

Thus, the inventive films have a haze of at least 5% lower than for a film without ethylene based plastomer, measured on a film of 50 µm thickness according to ASTM D1003. Preferably the haze is at least 10% lower, more preferably at least 20% lower and even more preferred at least 40% lower than for a film without ethylene based plastomer, measured on a film of 50 µm thickness according to ASTM D1003.

Additionally the inventive films have a gloss (20°) of at least 5% higher than for a film without ethylene based plastomer, measured on a film of 50 µm thickness according to ASTM D2457. Preferably the gloss is at least 10% higher, more preferably at least 15% higher and even more preferred at least 20% higher than for a film without ethylene based plastomer, measured on a film of 50 µm thickness according to ASTM D2457.

The inventive films moreover have a relative tear resistance [cN/µm] in machine direction (MD) of at least 5% higher than for a film without ethylene based plastomer, measured on a film of 50 µm thickness according to Elmendorf method (ISO 6383-2) . Preferably the relative tear resistance is at least 7% higher, more preferably at least 10% higher and even more preferred at least 15% higher than for a film without ethylene based plastomer, measured on a film of 50 µm thickness according to Elmendorf method (ISO 6383-2) .

Thus, the inventive films have the following properties simultaneously:
(i) a haze according to ASTM D1003 for a film thickness of 50 µm of at most 2.0%, preferably at most 1.9%,
ii) a gloss (20°) according to ASTM D2457 for a film thickness of 50 µm of at least 80%, preferably at least 85% and
iii) a relative tear resistance in machine direction [cN/µm] according to Elmendorf method (ISO 6383-2) for a film thickness of 50 µm of at least 0.70 cN/µm, preferably of at least 0.75 cN/µm and a relative tear resistance in transverse direction [cN/µm] according to Elmendorf method (ISO 6383-2) for a film thickness of 50 µm of at least 1.80 cN/µm, preferably of at least 1.85 cN/µm.

Possible articles for which the inventive blown film and cast film can be used are lamination or mono- or multilayer films, general packaging films, like bread bags, pouches and medical/hygienic films, wherein the film according to the invention comprises at least one layer.

Thus, the invention is furthermore directed to the use of the films according to the invention for the production of a laminated or mono- or multilayer films, preferably for the production of packaging for food and medicals.

It is a further aspect of the present invention to use the above described ethylene based plastomers in the above defined amounts to simultaneously increase optic properties, such as haze and gloss, as well as tear resistance of random propylene copolymer based mono-layer films.

Preferably the ethylene-based plastomer is added in an amount of from 2.0wt% to 15.0wt%, preferably from 3.0wt% to 12.0wt% and more preferably from 5.0wt% to 10wt%, to the random propylene copolymer in order to give 100% random propylene copolymer-plastomer-blend according to the present invention.

### Experimental part:

### Measuring methods

The following definitions of terms and determination methods apply for the above general description of the invention as well as to the below examples unless otherwise defined.

### Melt Flow Rate (MFR)

The melt flow rates of polypropylenes are measured at 230 °C with a load of 2.16 kg (MFR_{230/2.16}) according to ISO 1133

The melt flow rates of ethylene based plastomer are measured at 190 °C with a load of 2.16 kg (MFR_{190/2.16}) according to ISO 1133

### Density

The density was measured according to ISO 1183D and ISO1872-2 for sample preparation.

**Gloss** and **haze** as measures for the optical appearance of the films were determined according to ASTM D2457 (gloss) and ASTM D1003 (haze), both on blown and cast film samples with a thickness of 30 µm.

**Tear resistance (determined as Elmendorf tear (N)):** Applies for the measurement both in machine direction and in transverse direction. The tear strength is measured using the ISO 6383/2 method. The force required to propagate tearing across a film sample is measured using a pendulum device. The pendulum swings under gravity through an arc, tearing the specimen from pre-cut slit. The specimen is fixed on one 5 side by the pendulum and on the other side by a stationary clamp. The tear resistance is the force required to tear the specimen. The relative tear resistance (cN/µm) is then calculated by dividing the tear resistance by the thickness of the film.

### Materials used:

Queo™ 8203 is an ethylene based octene plastomer, MFR(190/2.16) of 3g/10 min, unimodal, density 0.882 g/cm³, produced in a solution polymerization process using a metallocene catalyst.

Queo™ 8210 is an ethylene based octene plastomer, MFR(190/2.16) of 10g/10 min unimodal, density 0.882 g/cm³, produced in a solution polymerization process using a metallocene catalyst.

Queo™ 0210 is an ethylene based octene plastomer, Melt Flow Rate (190/2.16) of 10 g/10 min, unimodal, density 0.902 g/cm³, produced in a solution polymerization process using a metallocene catalyst.

Queo™ 1007 is an ethylene based octene plastomer, Melt Flow Rate (190/2.16) of 10 g/10 min, unimodal, density 0.902 g/cm³, produced in a solution polymerization process using a metallocene catalyst.

Queo™ plastomers are commercially available from Borealis.

**RD208CF** is a polypropylene-ethylene random copolymer, MFR (230/2.16) of ca 8 g/10 min, Tm of ca 140 °C, C2-content of ca 4 wt%, visbroken from initial MFR 1.9 g/10 min.

**RD204CF** is a polypropylene-ethylene random copolymer, MFR (230/2.16) of ca 8 g/10 min, Tm of ca. 150 °C, C2-content of ca 2 wt%, visbroken from initial MFR 1.9 g/10 min.

Both random propylene copolymers are commercially available from Borealis.

All the grades were intentionally free from lubricants or easy migrating substances (except indicated otherwise) to ensure good surface properties.

### EXAMPLES:

Dry blends of random propylene copolymer and ethylene based plastomers were made by using a tumbler mixer. The weight percentage of added plastomer can be seen in Table 1:

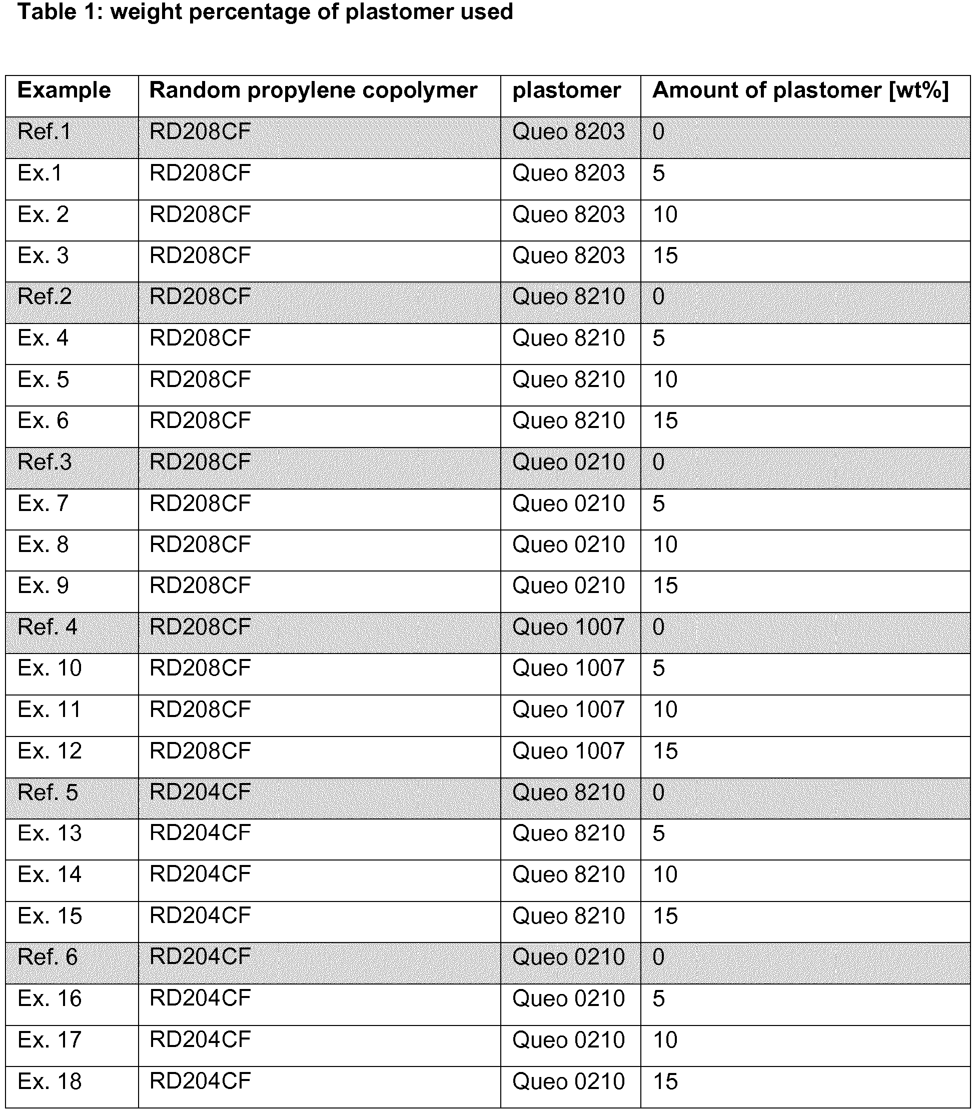

Out of these dry blends mono-layer cast films with a thickness of 50µm were produced.

The films used for the Inventive Examples (Ex.1 - Ex.18) and the reference examples (Ref.1 - Ref. 6) were produced on a Reifenhäuser CAST pilot line, equipped with an extruder type RH241-1-50-25, 50 mm diameter, L/D ratio: 25, and an extruder type RT78-1-35-25 35 mm diameter L/D ratio 25; a feeding block with 3 feedings; a coathanger die having a die width of 450 mm, die gap: 0,8 mm. The films were produced via 2 chillrolls, having a diameter of 320 mm each.

The melt temperature for the random propylene copolymer-plastomer blends and the pure random propylene copolymer was 230°C; the temperature of the chill roll was 20°C, roll speed: 10 m/min. Electric pinning via electrostatic charging was applied.

Afterwards the films were surface treated.

The surface treatment of the films was done using a Corona Generator G20S supplied by AFS, the energy loading was 800 W for all samples, frequency used was in the range of 26 kHz to 28 kHz. Care was taken that the distance of the charging bar to the film was equal over the whole width of the film. Film speed at corona treatment was 10 m/min.

Haze, gloss (20°) and tear resistance in machine direction and also transverse direction have been measured on the Corona-treated surface, the relative tear resistance (RTR) has been calculated, results can be seen in Table 2:

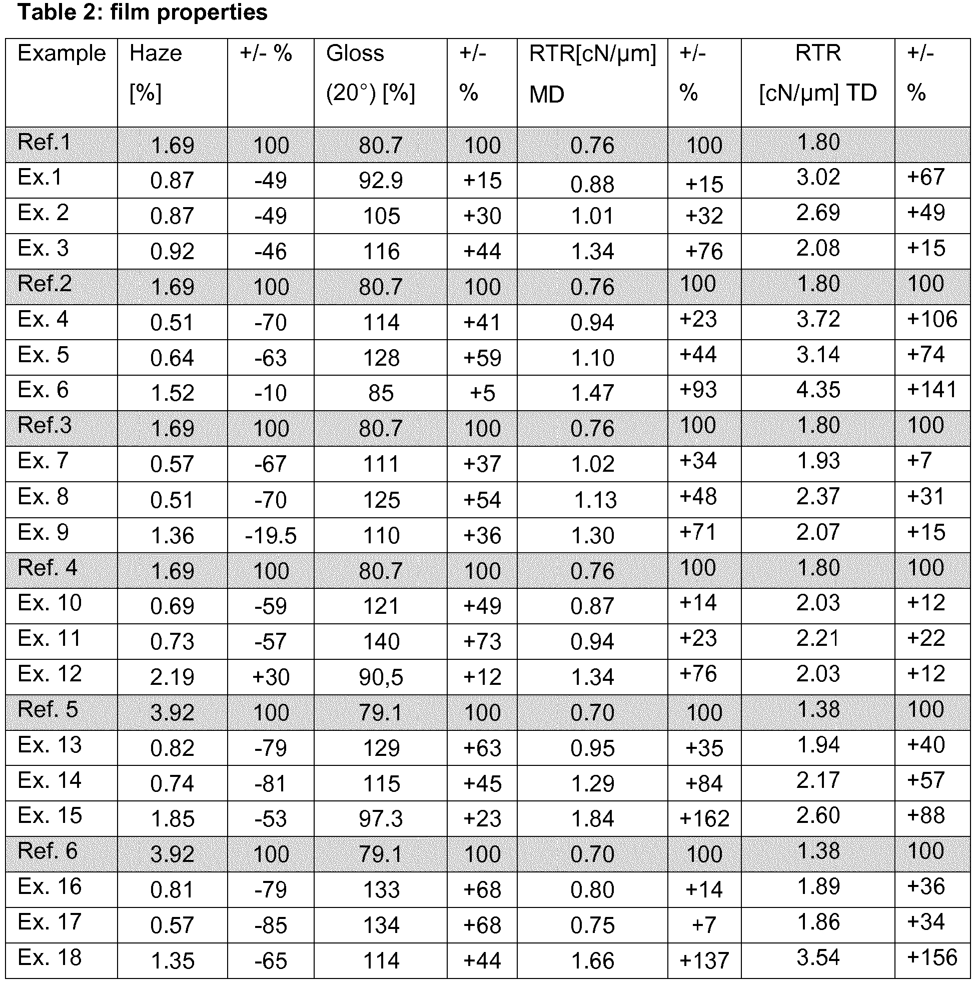

## Claims

1. Polypropylene mono-layer films produced with blown film or cast film technology comprising a blend of
a) 85 to 98.0 wt%, based on the blend, of a random propylene copolymer, wherein said random propylene copolymer consists of units derived from propylene and ethylene, and
b) 2.0 to 15.0 wt%, based on the blend, of an ethylene based plastomer having a density according to ISO 1183D of 0.915 g/cm³ or below and an MFR₂ according to ISO 1133 (190°C; 2.16kg) in the range of 2.0 to 30 g/10 min, wherein the amounts of a) and b) sum to 100 wt%;
wherein the film has
i) a haze according to ASTM D1003 for a film thickness of 50 µm of at most 2.0%
ii) a gloss (20°) according to ASTM D2457 for a film thickness of 50 µm of at least 80% and
iii) a relative tear resistance in machine direction [cN/µm] according to Elmendorf method (ISO 6383-2) for a film thickness of 50 µm of at least 0.70 cN/µm and a relative tear resistance in transverse direction [cN/µm] according to Elmendorf method (ISO 6383-2) for a film thickness of 50 µm of at least 1.80 cN/µm.

2. Polypropylene mono-layer films according to claim 1, wherein the ethylene in the random propylene copolymer is in the range of 1.0 to 7.0 wt%, more preferably 1.5 to 6.0 wt%, still more preferably 2.0 to 5.5 wt% and the Melt flow rate (MFR_{230/2.16}) of the random propylene copolymer is determined according to ISO1133, is in the range of 1.5 to 15.0 g/10min, more preferably in the range of 1.8 to 10.0 g/10min, still more preferably in the range of 2.0 to 9.0 g/10min.

3. Polypropylene mono-layer films according to any of the preceding claims 1 to 2, wherein the ethylene based plastomer is a copolymer of ethylene and propylene or a C₄ - C₁₀ alpha-olefin having
(a) a density in the range of 0.860 - 0.915 g/cm³, preferably in the range of 0.870 to 0.910 g/cm³,
(b) an MFR₂ (ISO 1133; 190°C; 2.16kg) in the range of 2.0 - 30 g/10 min, preferably in the range of 3.0 - 20 g/10 min and more preferably in the range of 5.0 - 15.0 g/min
(c) a melting point (measured with DSC according to ISO 11357-3:1999) below 130°C, preferably below 120°C, more preferably below 110°C and most preferably below 100°C,
(d) in case the copolymer is a copolymer of ethylene and propylene, an ethylene content from 10 to 55 wt%, preferably from 15 to 50 wt% and more preferably from 18 to 48 wt% and
(e) in case the copolymer is a copolymer of ethylene and a C₄ - C₁₀ alpha olefin, an ethylene content from 60 to 95 wt%, preferably from 65 to 90 wt% and more preferably from 70 to 88 wt%.

4. Polypropylene mono-layer films according to any of the preceding claims 1 to 3, wherein the films have a thickness of 5 to 300 µm, preferably 10 to 200 µm, more preferably 20 to 150 µm and can be non-oriented, mono-axially or bi-axially oriented.

5. Polypropylene mono-layer films according to claim 4, wherein the films are un-oriented cast films.

6. Process for the production of polypropylene mono-layer films according to any of the preceding claims 1 to 5, comprising the steps of
a. providing a random propylene copolymer-plastomer-blend by blending of 85.0 to 98.0 wt.%, based on the blend, of the random propylene copolymer and 2.0 to 15.0 wt% of the ethylene-based plastomer, wherein
b. forming a film out of the random propylene copolymer-plastomer-blend either by blown film or cast film technology and
c. optionally exposing said said film to a treatment that increases the surface energy.

7. Use of the mono-layer films according to claims 1 to 5, for lamination or mono- or multilayer films for packaging films and medical/hygienic films, wherein the mono-layer films forms at least one layer.

8. Use of ethylene-based plastomers having a density according to ISO 1183D of 0.915 g/cm³ or below and an MFR₂ according to ISO 1133 (190°C; 2.16kg) in the range of 2.0 to 30 g/10 min for improving simultaneously optic properties, such as haze and gloss, as well as tear resistance of a random propylene copolymer mono-layer film wherein the ethylene-based plastomer is added in an amount of from 2.0wt% to 15.0wt%, preferably from 3.0wt% to 12.0wt% and more preferably from 5.0wt% to 10wt%, to a random propylene copolymer in order to give 100% random propylene copolymer-plastomer-blend according to claim 1.

## Patentansprüche

1. Polypropylenmonoschichtfolien, hergestellt durch Blasfolien- oder Gießfolientechnologie, umfassend eine Mischung aus
a) 85 bis 98,0 Gew.-% auf Basis der Mischung von einem statistischen Propylencopolymer, wobei das statistische Propylencopolymer aus Einheiten besteht, die von Propylen und Ethylen abgeleitet sind, und
b) 2,0 bis 15,0 Gew.-% auf Basis der Mischung von einem ethylenbasierten Thermoblasten, der eine Dichte gemäß ISO 1183D von 0,915 g/cm³ oder weniger und einen MFR₂ gemäß ISO 1133 (190 °C; 2,16 kg) in dem Bereich von 2,0 bis 30 g/10 min aufweist, wobei sich die Mengen von a) und b) auf 100 Gew.-% aufsummieren;
wobei die Folie das Folgende aufweist:
i) eine Trübung gemäß ASTM D1003 für eine Foliendicke von 50 µm von mindestens 2,0 %
ii) einen Glanz (20°) gemäß ASTM D2457 für eine Foliendicke von 50 µm von mindestens 80 % und
iii) eine relative Reißfestigkeit in Maschinenrichtung [cN/µm] gemäß dem Elmendorf-Verfahren (ISO 6383-2) für eine Foliendicke von 50 µm von mindestens 0,70 cN/µm und eine relative Reißfestigkeit in Querrichtung [cN/µm] gemäß dem Elmendorf-Verfahren (ISO 6383-2) für eine Foliendicke von 50 µm von mindestens 1,80 cN/µm.

2. Polypropylenmonoschichtfolien nach Anspruch 1, wobei das Ethylen in dem statistischen Propylencopolymer in dem Bereich von 1,0 bis 7,0 Gew.-%, besonders vorzugsweise 1,5 bis 6,0 Gew.-%, noch mehr bevorzugt 2,0 bis 5,5 Gew.-% liegt und der Schmelzflussindex (MFR_{230/2,16}) des statistischen Propylencopolymers gemäß ISO1133 bestimmt wird und in dem Bereich von 1,5 bis 15,0 g/10 min, besonders vorzugsweise in dem Bereich von 1,8 bis 10,0 g/10 min, noch mehr bevorzugt in dem Bereich von 2,0 bis 9,0 g/10 min liegt.

3. Polypropylenmonoschichtfolien nach einem der vorhergehenden Ansprüche 1 bis 2, wobei der ethylenbasierte Thermoblast ein Copolymer aus Ethylen und Propylen oder einem C₄ - C₁₀ alpha-Olefin ist, der das Folgende aufweist:
(a) eine Dichte in dem Bereich von 0,860 - 0,915 g/cm³, vorzugsweise in dem Bereich von 0,870 bis 0,910 g/cm³,
(b) einen MFR₂ (ISO 1133; 190 °C; 2,16 kg) in dem Bereich von 2,0 - 30 g/10 min, vorzugsweise in dem Bereich von 3,0 - 20 g/10 min und besonders vorzugsweise in dem Bereich von 5,0 - 15,0 g/min
(c) einen Schmelzpunkt (gemessen mittels DSC gemäß ISO 11357-3:1999) von unter 130 °C, vorzugsweise von unter 120 °C, besonders vorzugsweise von unter 110 °C und am meisten bevorzugt von unter 100 °C,
(d) in dem Fall, dass das Copolymer ein Copolymer aus Ethylen und Propylen ist, einen Ethylengehalt von 10 bis 55 Gew.-%, vorzugsweise von 15 bis 50 Gew.-% und besonders vorzugsweise von 18 bis 48 Gew.-% und
(e) in dem Fall, dass das Copolymer ein Copolymer aus Ethylen ein C₄ - C₁₀ alpha-Olefin ist, einen Ethylengehalt von 60 bis 95 Gew.-%, vorzugsweise von 65 bis 90 Gew.-% und besonders vorzugsweise von 70 bis 88 Gew.-%.

4. Polypropylenmonoschichtfolien nach einem der vorhergehenden Ansprüche 1 bis 3, wobei die Folien eine Dicke von 5 bis 300 µm, vorzugsweise von 10 bis 200 µm, besonders vorzugsweise von 20 bis 150 µm aufweisen und sie nicht verstreckt, monoaxial oder biaxial verstreckt sein können.

5. Polypropylenmonoschichtfolien nach Anspruch 4, wobei die Folien unverstreckte Gießfolien sind.

6. Verfahren zum Herstellen von Polypropylenmonoschichtfolien nach einem der vorhergehenden Ansprüche 1 bis 5, umfassend die folgenden Schritte:
a. Bereitstellen von einer statistischen Propylencopolymer-Thermoplast-Mischung durch Mischen von 85,0 bis 98,0 Gew.-% auf Basis der Mischung von dem statistischen Propylencopolymer und 2,0 bis 15,0 Gew.-% von dem ethylenbasierten Thermoblasten, wobei
b. Bilden von einer Folie aus der statistischen Propylencopolymer-Thermoplast-Mischung durch entweder Blasfolien- oder Gießfolientechnologie und
c. optionales Exponieren von der Folie zu einer Behandlung, die die Oberflächenenergie erhöht.

7. Verwendung von den Monoschichtfolien nach den Ansprüchen 1 bis 5 zur Lamination oder von Mono- oder Multischichtfolien für Verpackungsfolien und medizinische/hygienische Folien, wobei die Monoschichtfolien mindestens eine Schicht bilden.

8. Verwendung von ethylenbasierten Thermoblasten, die eine Dichte gemäß ISO 1183D von 0,915 g/cm³ oder weniger und einen MFR₂ gemäß ISO 1133 (190 °C; 2,16 kg) in dem Bereich von 2,0 bis 30 g/10 min aufweisen, zum gleichzeitigen Verbessern von optischen Eigenschaften, wie Trübung und Glanz, sowie der Reißfestigkeit von einer statistischen Propylencopolymer-Monoschichtfolie, wobei der ethylenbasierte Thermoblast mit einer Menge von 2,0 Gew.-% bis 15,0 Gew.-%, vorzugsweise von 3,0 Gew.-% bis 12,0 Gew.-% und besonders vorzugsweise von 5,0 Gew.-% bis 10,0 Gew.-% zu einem statistischen Propylencopolymer zugegeben wird, um 100% statistische Propylencopolymer-Thermoplast-Mischung nach Anspruch 1 zu ergeben.

## Revendications

1. Films monocouches de polypropylène produits avec une technologie de film soufflé ou de film coulé comprenant un mélange de
a) 85 à 98,0% en poids, par rapport au mélange, d'un copolymère statistique de propylène, dans lesquels ledit copolymère statistique de propylène est constitué de motifs dérivés de propylène et d'éthylène, et
b) 2,0 à 15,0 % en poids, par rapport au mélange, d'un plastomère à base d'éthylène ayant une masse volumique selon ISO 1183D de 0,915 g/cm³ ou moins et un MFR₂ selon ISO 1133 (190 °C ; 2,16 kg) dans la plage de 2,0 à 30 g/10 min, dans lesquels la somme des quantités de a) et de b) est de 100 % en poids ;
dans lesquels le film a
i) un voile selon ASTM D1003 pour une épaisseur de film de 50 µm d'au plus 2,0 %
ii) un brillant (20°) selon ASTM D2457 pour une épaisseur de film de 50 µm d'au moins 80% et
iii) une résistance au déchirement relative dans la direction machine [cN/µm] selon le procédé d'Elmendorf (ISO 6383-2) pour une épaisseur de film de 50 µm d'au moins 0,70 cN/µm et une résistance au déchirement relative dans la direction transversale [cN/µm] selon le procédé d'Elmendorf (ISO 6383-2) pour une épaisseur de film de 50 µm d'au moins 1,80 cN/µm.

2. Films monocouches de polypropylène selon la revendication 1, dans lesquels l'éthylène dans le copolymère statistique de propylène est dans la plage de 1,0 à 7,0% en poids, mieux encore de 1,5 à 6,0 % en poids, encore mieux de 2,0 à 5,5 % en poids et l'indice d'écoulement à l'état fondu (MFR_{230/2,16}) du copolymère statistique de propylène est déterminé selon ISO 1133, est dans la plage de 1,5 à 15,0 g/10 min, mieux encore dans la plage de 1,8 à 10,0 g/10 min, encore mieux dans la plage de 2,0 à 9,0 g/10 min.

3. Films monocouches de polypropylène selon l'une quelconque des revendications 1 ou 2, dans lesquels le plastomère à base d'éthylène est un copolymère d'éthylène et de propylène ou d'une alpha-oléfine en C₄-C₁₀ ayant
(a) une masse volumique dans la plage de 0,860 à 0,915 g/cm³, de préférence dans la plage de 0,870 à 0,910 g/cm³,
(b) un MFR₂ (ISO 1133; 190 °C ; 2,16 kg) dans la plage de 2,0 à 30 g/10 min, de préférence dans la plage de 3,0 à 20g/10min et mieux encore dans la plage de 5,0 à 15,0 g/10 min
(c) un point de fusion (mesuré avec un DSC selon ISO 11357-3:1999) inférieur à 130 °C, de préférence inférieur à 120 °C, mieux encore inférieur à 110 °C et tout particulièrement inférieur à 100 °C,
(d) dans le cas où le copolymère est un copolymère d'éthylène et de propylène, une teneur en éthylène de 10 à 55 % en poids, de préférence de 15 à 50 % en poids et mieux encore de 18 à 48 % en poids et
(e) dans le cas où le copolymère est un copolymère d'éthylène et d'une alpha-oléfine en C₄-C₁₀, une teneur en éthylène de 60 à 95 % en poids, de préférence de 65 à 90 % en poids et mieux encore de 70 à 88 % en poids.

4. Films monocouches de polypropylène selon l'une quelconque des revendications 1 à 3, dans lesquels les films ont une épaisseur de 5 à 300 µm, de préférence de 10 à 200 µm, mieux encore de 20 à 150 µm et peuvent être non orientés, mono-axialement ou bi-axialement orientés.

5. Films monocouches de polypropylène selon la revendication 4, dans lesquels les films sont des films coulés non orientés.

6. Procédé de production de films monocouches de polypropylène selon l'une quelconque des revendications 1 à 5, comprenant les étapes de
a. fourniture d'un mélange de copolymère statistique de propylène - plastomère par mélange de 85,0 à 98,0% en poids, par rapport au mélange, du copolymère statistique de propylène et de 2,0 à 15,0 % en poids du plastomère à base d'éthylène,
b. formation d'un film à partir du mélange de copolymère statistique de propylène - plastomère par une technologie de film soufflé ou de film coulé et
c. éventuellement exposition dudit film à un traitement qui augmente l'énergie superficielle.

7. Utilisation des films monocouches selon les revendications 1 à 5, pour des films de stratification ou monocouches ou multicouches pour des films d'emballage et des films médicaux/hygiéniques, dans laquelle les films monocouches forment au moins une couche.

8. Utilisation de plastomères à base d'éthylène ayant une masse volumique selon ISO 1183D de 0,915 g/cm³ ou moins et un MFR₂ selon ISO 1133 (190 °C ; 2,16 kg) dans la plage de 2,0 à 30 g/10 min pour améliorer simultanément des propriétés optiques, telles que le voile et le brillant, ainsi que la résistance au déchirement d'un film monocouche de copolymère statistique de propylène, dans laquelle le plastomère à base d'éthylène est ajouté en une quantité de 2,0 % en poids à 15,0 % en poids, de préférence de 3,0 % en poids à 12,0% en poids et mieux encore de 5,0 % en poids à 10 % en poids, à un copolymère statistique de propylène afin d'obtenir un mélange de copolymère statistique de propylène - plastomère à 100 % selon la revendication 1.
